# EUROPEAN PATENT SPECIFICATION

(11) **EP 2 797 409 B1**
(45) Date of publication and mention of the grant of the patent: **07.10.2015**
(21) Application number: 12820984.8
(22) Date of filing: 21.12.2012
(51) Int. Cl.: A01K 1/00

(54) **AN ANIMAL HOUSING ARRANGEMENT AND METHOD OF CONTROLLING A COOLING SYSTEM THEREOF**
TIERBEHAUSUNGSANLAGE UND STEUERVERFAHREN EINES KÜHLUNGSSYSTEM DAFÜR
AGENCEMENT DE BÂTIMENT D'ÉLEVAGE ET PROCÉDÉ DE COMMANDE D'UN SYSTÈME DE REFROIDISSEMENT DE CELUI-CI

(30) Priority: 29.12.2011 SE 1151287; 29.12.2011 US 201161581125 P
(43) Date of publication of application: 05.11.2014
(73) Proprietor: DeLaval Holding AB, 147 21 Tumba (SE)
(72) Inventor: GEOFFROY, Emmanuel, 118 28 Stockholm (SE)
(74) Representative: Hällgren, Christer
(86) International application number: PCT/SE2012/051474
(87) International publication number: WO 2013/100850

(56) References cited:
- EP-A1- 2 005 819
- WO-A1-2005/065447
- EA-B1- 013 366
- SU-A1- 115 691
- SU-A1- 676 253
- SU-A1- 1 724 123
- SU-A1- 1 743 498
- US-A- 4 445 460
- US-A1- 2004 065 268

## Description

### TECHNICAL FIELD

The present invention relates to an animal housing arrangement comprising an enclosed area arranged to house domestic animals and a cooling system for cooling domestic animals, said cooling system comprising a plurality of cooling units provided to generate a flow of a cooling medium that will either directly or indirectly contribute to the cooling of said animals, and a control unit arranged to control the operation of said cooling units, wherein said animal housing arrangement comprises an enclosed area which is arranged to house said animals and is provided with an entrance in one end and an exit in another end, and wherein, in said area, there is provided an element which is arranged to move in a direction from the entrance towards the exit and thereby to permit or force animals to move in said direction inside the enclosed area.

The present invention also relates to a method of controlling a cooling system for cooling of domestic animals in an animal housing arrangement, wherein said cooling system comprises a plurality of cooling units provided to generate a flow of a cooling medium that will either directly or indirectly contribute to the cooling of said animals, wherein said animal housing arrangement comprises an enclosed area which is arranged to house said animals and is provided with an entrance in one end and an exit in another end, and wherein, in said area, there is provided an element which is arranged to move in a direction from the entrance towards the exit and thereby to permit or force animals to move in said direction inside the enclosed area.

Preferably, domestic animals are referred to as cattle, preferably cows, sheep, goats or buffalos that are housed in an enclosed area for industrial purposes, such as milk production.

### BACKGROUND OF THE INVENTION

It has been noted that during periods of high heat conditions cattle become uncomfortable and heat stressed and, accordingly, significantly reduce their feed consumption, which may reduce the rate of weight gain for the cattle, and for dairy cows also reduce the milk production. The effects of heat stress also show in increased respiration rate, increased water intake, increased sweating, slower rate of feed passage and decreased blood flow to internal organs, which has negative impact on the general condition of the animals as well as their reproduction ability, thereby contributing to economic losses to dairy producers.

As a consequence thereof, for the purpose of suppressing the negative effects of heat on the cattle, cooling systems have been provided in the enclosed areas in which such cattle are housed. In the case of dairy cows, typical enclosed areas that may be provided with cooling systems are waiting areas, milking areas, feeding areas or resting areas.

Prior art cooling systems generally consist of an air distribution duct for directing a turbulent air stream onto the cows and a separate water line that terminates with a nozzle which produces a spray. Nozzles are commonly used, in contrast to discharge directly from a hose, in order to conserve water. Sprinklers that are positioned in the feeding area of a dairy farm generally provide supplemental cooling, reducing the fan power needed and enabling a marginally hot cow to be much more comfortable. Since cows sweat only one-tenth as much as humans, a spray-fan cooling system serves to conduct away surface heat and increases the vaporization of moisture from the skin of the cow. This body-cooling effect enhances comfort and increases milk production.

The water ejected by means of the nozzles may be of larger droplets that get into contact with the animal and thereby contribute to a direct cooling thereof, or may be of smaller droplets, like mist, that will contribute to a cooling of the air around the animal rather than a direct cooling of the animal. Such cooling of the animal through cooling of ambient air may be regarded as an indirect cooling of the animal.

EP 1 480 725 discloses a cooling system for the cooling of cows, which addresses the problem of inordinate consumption of water in cooling systems that use water lines and nozzles for the cooling of the cows. EP 1 480 725 suggests an optimised fan and spraying device design which will provide for a more efficient use of water for the purpose of cooling the animals.

WO 99/25179 discloses a stable with a climate control system, wherein the amount of air to be supplied and the temperature thereof can be controlled for each fan individually, so that zones are created which can be controlled independently of each other depending on the number of animals present in each zone, as measured e.g. by CO₂ sensors.

Document US-A1-2004/0065268 discloses an animal shelter with a cooling system for cooling domestic animals, said cooling system comprising a plurality of cooling units provided to generate a flow of a cooling medium that will either directly or indirectly contribute to the cooling of said animals, and a control unit arranged to control the operation of said cooling units.

### THE OBJECT OF THE INVENTION

It is an object of the present invention to provide a cooling system for cooling of domestic animals which enables efficient use of energy for the purpose of cooling said animals, in particular for the purpose of cooling animals that are moving through an enclosed area in which an element that moves in a direction from an entrance to an exit of said area permits or forces the animals to move in said direction. It should be understood that the animals do not necessarily move continuously through the enclosed area, but may stay there for a considerable period of time while resting, waiting for entry into another area, or being milked etc. However, seen over time, they will move through the enclosed area. In cases in which the cooling system uses water as a cooling means, it is an object of the invention to suggest a solution according to which a required water supply line pressure can be either reduced or held at a low level for a given number of cooling units, or a predetermined supply line pressure will be sufficient for an elevated number of cooling units.

### SUMMARY OF THE INVENTION

The object of the invention is achieved by means of the initially defined animal housing arrangement, which is characterised in that said plurality of cooling units are subdivided into at least two separate subgroups of cooling units, each subgroup covering at least a part of said enclosed area and comprising at least one cooling unit, wherein the control unit is arranged to detect the position of said element as the latter moves in said direction and to based on this detected position control at least one subgroup on a first side of said element to be in active mode and simultaneously control at least one other subgroup on an opposite second side of said element to be in inactive mode.

It is assumed that the animals will be predominantly located on one side of the element as the latter moves through the enclosed area from the entrance thereof to the exit thereof. The invention provides for inactivation of at least one subgroup of cooling units on one side of said element, thereby also providing for use of less energy or cooling medium with regard taken to the assumed position of the animals, indirectly defined by the position of said element.

A control unit may include computer hardware and software provided so as to enable the suggested control of the cooling units of the cooling system. A sensor or electric circuit that detects the position of said element that moves through the enclosed area is then preferably also part of the cooling system, and provides the control unit with information regarding the position of said element in relation to the subgroups of cooling units that are distributed over said area and cover at least a part thereof. Based on such information, the control unit controls the operation of the respective subgroups of cooling units. As an alternative to a hardware/software solution, the control unit may comprise an electric circuit which is capable of detecting the position of said element in relation to the subgroups of cooling units and is designed to control the operation of the cooling units in accordance with the teaching of the present invention on the basis of the detected positions of said element.

Preferably, the cooling units of the cooling system cover a major part of the enclosed area, most preferably the whole area. Preferably, the element that is arranged to move through the enclosed area and thereby permit or force animals in said area to move in a direction from an entrance thereof to an exit thereof comprises a gate extending over the width of the enclosed area, and is preferably driven by a motor. The control unit may be provided with software or comprise an electric circuit that provides for control of a motor that drives said element. Detectors for detecting the position of animals in the enclosed area may be provided, and the control of the motion of said element is then preferably performed on the basis of input from such detectors. Alternatively, the operation of said element is controlled manually based on ocular monitoring of the presence of animals in said area, or there is provided a timer on the basis of which the motion of said element is controlled, or there is provided other sensors, such as sensors connected to milking equipment or the like, the data output of which is used as input for controlling the motion of said element. It is to be understood that the motion of said element in said direction is not necessarily continuous but may include intermediate stops along the way. Preferably, said element is arranged to be moved from a start position adjacent an entrance of said area to and end position adjacent an exit of said area, and then back to said start position. In any of the start position or the end position, said element is arranged to enable passage of animals. For example, there may be provided means for enabling an elevation of said element, such that the animals can pass under the element.

According to one embodiment, said control unit is arranged to sequentially inactivate different subgroups of cooling units on at least one of said first side and second side in accordance with a predetermined order, while simultaneously controlling at least one other subgroup on the same side to be at least periodically in active mode. Thereby, some subgroups will be in active mode while some are in inactive mode, and there will be a continuous shifting of which subgroups that are in active and inactive mode respectively. All subgroups will never be in active mode simultaneously. Thereby, peaks in the use of energy or cooling medium consumption can be suppressed to lower levels. If for example the pressure in a supply line for cooling water is low, the suggested sequential inactivation of predetermined subgroups will enable supply of sufficient pressure to those subgroups that are activated.

According to a preferred embodiment, there is a plurality of subgroups on said first side, and the control unit is arranged to sequentially inactivate subgroups of cooling units on said first side. Sequential inactivation is referred to as in a specific order. In other words, while one or more subgroups are inactivated to be in inactive mode, at least one other subgroup on said side of said element is in active mode. Thereby, it is avoided that all subgroups are in active mode at the same time on said first side. Since continuous cooling of animals normally is not needed or preferred, periodical activation of the subgroups is preferred. However, instead of simultaneous activation of all subgroups, followed by simultaneous inactivation thereof, the invention suggests sequenced inactivation. Thereby, peaks in use of energy or cooling medium consumption can be suppressed to lower levels.

According to a preferred embodiment, the control unit is arranged to control all subgroups on said second side of said elements to be in inactive mode and to simultaneously control at least one subgroup on said first side to be at least periodically in active mode. As previously mentioned, it can be assumed that a group of animals are gathered only on one side of said element as the latter moves through the enclosed area. Provided that the first side is the one on which the animals are gathered, any activation of cooling units on the second side should preferably be avoided in order to lower the energy consumption or need of water supply of the cooling system.

According to yet another embodiment, said element is an element arranged to push and thereby force animals in the enclosed area to move from said entrance towards said exit, the second side thereof being the side between said element and said entrance. Thereby, it may be assumed that there will be no animals on said second side of said element during the travel of the latter from the entrance towards the exit of the enclosed area. Preferably, the control unit is arranged to control all cooling units on the second side to be in inactive mode in order to avoid excessive use of energy and/or cooling medium consumption.

According to one embodiment, the cooling system comprises animal presence detectors arranged to detect presence or absence of animals in different parts of said area, the control unit being arranged to control subgroups that cover areas in which absence of animals is detected to be in inactive mode, and to simultaneously control subgroups that cover areas in which presence of animals is detected to be at least periodically in active mode. Preferably, on a side on which presence of animals is detected for certain subareas thereof, only the subgroups that cover said subareas are controlled by the control unit to be in active mode. Preferably, in order to minimize energy consumption peaks and possible cooling medium supply line pressure, the control unit is arranged to sequentially inactivate and activate said subgroups. Thereby each subgroup covering one of said subareas will be in active mode periodically, and there will always be at least one of said subgroups that is in inactive mode.

According to one embodiment, each of said cooling units comprises a liquid spraying device arranged to eject a cooling liquid, the cooling system comprising a pipe system through which liquid is conducted to said cooling units, and the control unit being arranged to inactivate or activate said spraying device. Preferably, the cooling liquid is water. In such a system, the principles of the present invention will contribute to lower need of cooling liquid supply line pressure, since the control unit is arranged to prevent that all the cooling units of the cooling system are simultaneously in active mode.

Preferably, each subgroup is provided with a valve by means of which the flow of liquid to the cooling unit or units of that subgroup is controlled, the control unit being arranged to inactivate or activate the cooling unit by controlling the operation of said valve. Said inactivation of a subgroup includes inactivation of the spraying devices thereof, and said control of a subgroup to be in active mode includes control of the spraying devices thereof to be in active mode.

According to one embodiment, each cooling unit comprises an electrically driven fan arranged to generate a flow of air, and the control unit is arranged to control the operation of said fan. Said inactivation of a subgroup includes inactivation of the fan or fans thereof, and said control of a subgroup to be in active mode includes a control of the fan or fans thereof to be in active mode. Preferably, a cooling unit comprises a fan and a spraying device. Suitable designs thereof may be those presented in the prior art. For example, it may be conceived that the spraying device comprises a nozzle which is positioned in front of the fan, whereby the spraying device is arranged to emit a cooling liquid, preferably water, towards a dedicated area in which an animal may be present, and the fan will supplement the spraying device by generating a flow of air towards said area. The cooling liquid may either get into direct contact with an animal located in said area and thereby cool the animal directly, or may only have a cooling effect on the ambient air of the animal and thereby cool the animal indirectly through cooling of said ambient air. Inactive mode of a cooling unit or subgroup comprising at least one such cooling unit, and in which the cooling unit comprises a fan and a spraying device, is referred to as inactivation of at least one of the spraying device and the fan.

According to a preferred embodiment, said enclosed area is any of a waiting area, a milking area, a feeding area or a resting area. Preferably, the enclosed area is particularly adopted for the housing of cows.

The object of the invention is also achieved by means of the initially defined method, characterised in that said plurality of cooling units (6) are subdivided into at least two separate subgroups (11-15) of cooling units (6), each subgroup (11-15) comprising at least one cooling unit (6), wherein during operation of the cooling system, the position of said element is detected as the latter moves in said direction, and based on this detected position at least one subgroup on a first side of said element is controlled to be at least periodically in active mode and simultaneously at least one other subgroup on an opposite second side of said element is controlled to be in inactive mode.

According to one embodiment, on at least one of said first side and second side, there is provided a plurality of subgroups, wherein said subgroups are sequentially inactivated in accordance with a predetermined order, while simultaneously at least one other subgroup on the same side is controlled to be at least periodically in active mode. Preferably, all subgroups on said second side of said elements are controlled to be in inactive mode and, simultaneously, at least one subgroup on said first side is controlled to be at least periodically in active mode.

According to yet another embodiment, animals present in said enclosed area are pushed and thereby forced by said element to move from said entrance towards said exit, the second side thereof being the side between said element and said entrance.

It is also preferred that the cooling system comprises animal presence detectors arranged to detect presence or absence of animals in different parts of said area, wherein subgroups that cover areas in which absence of animals is detected are controlled to be in inactive mode and, simultaneously, subgroups that cover areas in which presence of animals is detected are controlled to be at least periodically in active mode.

Preferably, each cooling unit comprises a liquid spraying device and the cooling system comprises a pipe system by means of which liquid is conducted to said liquid spraying devices, wherein inactivation of a cooling unit includes inactivation of said liquid spraying device, and control of a cooling unit to be in active mode includes control of said liquid spraying device to be in active mode.

It is to be understood that the method according to the invention may be implemented on, or by means of, an animal housing arrangement as defined in accordance with any one of the embodiments presented in the foregoing part of this description. The advantages of the method of the present invention also correspond to the advantages obtained by means of the animal housing arrangement presented in the foregoing part of the description.

Further features and advantages of the present invention will be presented in the following detailed description of embodiments of the invention.

### BRIEF DESCRIPTION OF THE DRAWINGS

The present invention will hereinafter be described in detail with reference to the enclosed drawing, on which:

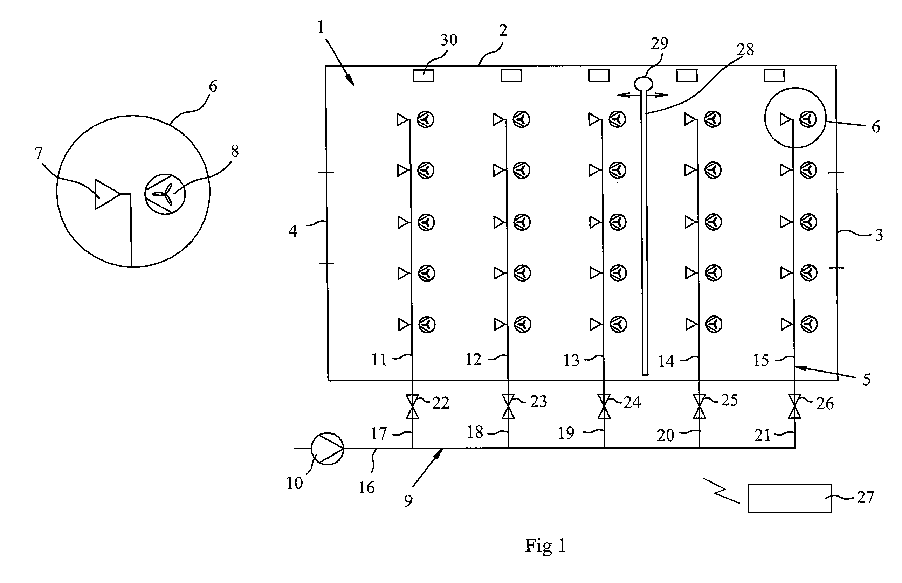

Fig. 1 is a schematic representation of an animal housing arrangement according to one embodiment of the invention, as seen from above.

### DETAILED DESCRIPTION OF THE INVENTION

Fig. 1 shows an animal housing arrangement according to one embodiment of the invention. The arrangement comprises an enclosed area 1, which is surrounded and thereby enclosed by means of a fence 2 or the like. In this particular embodiment the enclosed area is a waiting area for cows, but it should be understood that it could be any kind of area that is arranged for the purpose of at least temporarily housing a herd of animals such as cows. At a first end of the area 1 there is an entrance 3 through which the animals are supposed to enter the area 1. The entrance 3 may include any kind of gate device for opening and closure thereof, but may also be of a kind that is permanently open, i.e. a permanently open opening in the fence 2. At a second end of the area 1 there is provided an exit 4, which preferably includes a gate device for opening and closure thereof. There may be provided a roof above the enclosed area 1 in order to provide for shadow and reduced temperature in said area during hot weather conditions.

The animal housing arrangement further comprises a cooling system 5, which comprises a plurality of cooling units 6. Each cooling unit 6 comprises a spraying device 7 and a fan 8. Preferably, the spraying device 7 is formed by a nozzle provided in connection with a cooling liquid supply pipe system 9. The fan 8 is driven by an electric motor (not shown). Each cooling unit 6 functionally covers a predetermined cooling area, i.e. is able of cooling an animal present in said cooling area. Together, the cooling units 6 functionally cover a major part of the enclosed area 1, preferably more than 80% thereof, and most preferably more than 90% thereof. The cooling liquid supply pipe system 9 comprises a pump 10, which may be either a locally installed pump for generating a predetermined pressure, or may be the pressure-generating means of a common public water delivery network.

The cooling units 6 are subdivided into subgroups 11-15. In the embodiment presented in fig. 1, each subgroup 11-15 is formed by a predetermined number of cooling units 6 arranged in a row that extends in a direction generally perpendicular to a straight line between said entrance 3 and said exit 4. Accordingly, the subgroups 11-15 form a plurality of rows arranged between the entrance 3 and the exit 4 of the enclosed area 1. The pipe system 9 comprises a common supply pipe 16 from which there is a separate branch 17-21 to each respective subgroup 11-15 of cooling units. Each branch 17-21 is provided with a valve 22-26, preferably a solenoid vale, by means of which the flow of cooling liquid to the respective subgroup 11-15 is controlled. For the purpose controlling the operation of the valves 22-26, and thereby the inactivation and activation respectively of the spraying devices 7 of the respective cooling units 6 of the respective subgroup 11-15, cooling system 9 also comprises a control unit 27. The control unit 27 is operatively connected to the valves 22-26 and arranged to transmit control signals to the latter, either by wire or wirelessly depending on requested setup. The control unit 26 comprises computer hardware and software adapted to control the valves 22-26. For the control of the operation of the respective fans 8 of each respective subgroup 11-15 the control unit 26 is arranged to transmit control signals to the electric motors that drive the fans 8. Accordingly, the operation of each cooling unit 6 is controlled by means of the control unit 27.

The animal housing arrangement further comprises an element 28 which is arranged to move in a direction from the entrance 3 towards the exit 4 and thereby to permit or force animals to move in said direction inside the enclosed area 1. The movable element 28 comprises a gate which extends over the whole width of the enclosed area 1. There are provided guide members, not shown, on which the movable element 28 is suspended and by means of which it is guided when moving in said direction. Such guide members may form part of the fence 2 that encloses the enclosed area 1. Preferably, there is provided a motor or the like, not shown, by means of which the movable element 28 is moved between the entrance 3 and the exit 4 of the enclosed area 1. The operation of such a motor may be controlled by the control unit 27. However, manual control of such a motor is also conceivable.

There is also provided a detector 29 which is arranged to detect, or sense, the position of the movable element 28 in relation to the position of the subgroups 11-15. The position data gathered by the detector 29 is transmitted to the control unit 27, which is arranged to make use of that input in order to control the operation of the respective subgroups 11-15. In other words, the control unit 27 is arranged to detect the position of said movable element 28, by means of said detector 29, and control the operation of the subgroups 11-15 on the basis thereof. The detector 29 may be of any suitable kind, such as an optical one.

On the basis of the input from detector 29, the control unit 27 controls the subgroups 11-15 in the following way, given that the movable element 28 has the function of pushing a herd of animals already at place in the enclosed area towards and out through the exit 4 thereof: when the position data received from the detector establishes that the movable element 28 has passed a subgroup on its way from the entrance 3 to the exit 4, to such a degree that the area functionally covered by that subgroup is to at least a major part on the side of the movable element 28 that is closest to the entrance 3, the control unit 27 transmits a signal to the valve 22-26 of that subgroup 11-15 to close, and thereby set the spraying devices 7 of that subgroup 11-15 in inactive mode. The control unit 27 also transmits a signal to the motor or motors that drive the fans 8 of said subgroup to stop, and thereby sets the fans 8 into inactive mode. Thereby, the subgroup in question is set into inactive mode. As the movable element 28 passes further subgroups on its travel from the entrance 3 to the exit, the control unit 27 is arranged to go through the same procedure with each one of those subgroups. When the movable element 28 finally reaches the region of the exit, and the area between said element and the exit 4 is free from animals, all subgroups 11-15 are controlled by the control unit 27 to be in inactive mode.

The side of the movable element 28 adjacent the exit 4 may be named the first side (in contrast to the side adjacent the entrance, which may be named the second side). The control unit 27 is arranged to sequentially inactivate different subgroups 11-15 of cooling units 6 on at least one of said sides in accordance with a predetermined order, while simultaneously controlling at least one other subgroup 11-15 on the same side to be at least periodically in active mode. The number of subgroups 11-15 that are simultaneously in active mode, and the period of time that each subgroup is in active mode and inactive mode respectively, should be determined on the basis of outer conditions such as temperature and humidity of the air. Temperature and humidity sensors, not shown, may therefore preferably be part of the cooling system 5 and be operatively connected to the control unit 27, wherein the latter receives temperature and humidity information from such sensors as input and decides the details of the sequenced operation of the cooling unit subgroups 11-15 on the basis thereof. If, for example, the temperature is high, the control unit 27 may be arranged to only permit one subgroup at a time to be in active mode. At somewhat lower temperatures, that still requires cooling of animals present in the enclosed area 1, more than one of said subgroups 11-15 at a time may be in inactive mode.

It should be understood that, as an alternative, the movable element 28 may be arranged to be in front of a herd of animals moving into the enclosed area. In such a case, the second side of the movable element is the one on which sequenced activation and inactivation of the subgroups 11-15 is performed on the basis of output from the control unit 27, while the first side is the one in which all subgroups 11-15 are in inactive mode.

If the movable element 28 is used as a divider between two groups of animals, which are then present on both sides of the movable element 28, sequenced inactivation of subgroups in accordance with the teaching of the invention is preferably performed on both sides thereof.

As a supplement to the above-mentioned input to the control unit 27, the latter may also be provided with input regarding the presence or absence of animals in different parts of the enclosed area 1. For that purpose, the cooling system 5 suggested in fig. 1 comprises a plurality of detectors 30, such as optical detectors, for detecting the presence of animals in predetermined parts of said area 1. Preferably, there is at least one detector for each subgroup 11-15, i.e. a detector detects the presence of animals in the area that is functionally covered by the respective subgroup. As long as absence of animals is detected in the area of a specific subgroup 11-15, the control unit 27 is arranged to control the subgroup 11-15 in question to be in inactive mode. Sequenced activation and inactivation of subgroups is then preferably only performed with the subgroups for which presence of animals has been detected by the detectors 30. Since full coverage of the enclosed area 1 by means of such detectors 30 may be expensive, it may suffice that only a limited part, even a minor part, of said enclosed area 1 is covered by said detectors 30. For the remaining part, not covered by such sensors, control of the operation of the respective subgroups 11-15 is preferably only performed on the basis of input regarding weather conditions (temperature, humidity, etc) and the position of the movable element 28, and, of course, on the basis of the knowledge of how much cooling is needed for each specific weather condition.

In the case in which the enclosed area 1 is a waiting area in which animals, preferably cows, are waiting to enter a subsequent milking area, it is preferred that the subgroup or subgroups closest to the exit 4 should be in inactive mode sufficiently often and long such that the animals are sufficiently dry when entering the milking area. Accordingly, the control unit may be arranged to control said group or groups not to be in active mode for more than a predetermined maximum period of time, regardless of for how long time the other subgroups are controlled to be in active mode.

The embodiments suggested in the foregoing description have been presented by way of example. It is assumed that the person skilled in the art will be able of reducing the invention to practice without undue burden once presented with the principles thereof. It is must therefore be assumed that numerous solutions of hardware/software and electric circuits for implementing the principles of the invention will be realised by the person skilled in the art, wherein such embodiments will still be within the scope of protection as defined in the independent claims of the present application, supported by the description thereof.

## Claims

1. An animal housing arrangement comprising an enclosed area (1) arranged to house domestic animals and a cooling system (5) for cooling domestic animals, said cooling system (5) comprising a plurality of cooling units (6) provided to generate a flow of a cooling medium that will either directly or indirectly contribute to the cooling of said animals, and a control unit (27) arranged to control the operation of said cooling units (6), wherein said animal housing arrangement comprises an enclosed area (1) which is arranged to house said animals and which is provided with an entrance (3) in one end and an exit (4) in another end,
**characterised in that**,
in said area, there is provided an element (28) which is arranged to move in a direction from the entrance (3) towards the exit (4) and thereby to permit or force animals to move in said direction inside the enclosed area (1), wherein said plurality of cooling units (6) are subdivided into at least two separate subgroups (11-15) of cooling units (6), each subgroup (11-15) covering at least a part of said enclosed area (1) and comprising at least one cooling unit (6), wherein the control unit (27) is arranged to detect the position of said element (28) as the latter moves in said direction and to based on this detected position control at least one subgroup (11-15) on a first side of said element (28) to be in active mode and simultaneously control at least one other subgroup (11-15) on an opposite second side of said element (28) to be in inactive mode.

2. An animal housing arrangement according to claim 1, **characterised in that** said control unit (27) is arranged to sequentially inactivate different subgroups (11-15) of cooling units (6) on at least one of said first side and second side in accordance with a predetermined order, while simultaneously controlling at least one other subgroup (11-15) on the same side to be at least periodically in active mode.

3. An animal housing arrangement according to claim 2, **characterised in that** there is a plurality of subgroups (11-15) on said first side and that the control unit (27) is arranged to sequentially inactivate subgroups (11-15) of cooling units (6) on said first side.

4. An animal housing arrangement according to any one of claims 1-3, **characterised in that** the control unit (27) is arranged to control all subgroups (11-15) on said second side of said element (28) to be in inactive mode and to simultaneously control at least one subgroup (11-15) on said first side to be at least periodically in active mode.

5. An animal housing arrangement according to any one of claims 1-4, **characterised in that** said element (28) is an element arranged to push and thereby force animals in the enclosed area (1) to move from said entrance (3) towards said exit (4), and said second side thereof being the side between said element (28) and said entrance (3).

6. An animal housing arrangement according to any one of claims 1-5, **characterised in that** the cooling system (5) comprises animal presence detectors (30) arranged to detect presence or absence of animals in different parts of said enclosed area (1), the control unit (27) being arranged to control subgroups (11-15) that cover areas in which absence of animals is detected to be in inactive mode and to simultaneously control subgroups (11-15), that cover areas in which presence of animals is detected to be at least periodically in active mode.

7. An animal housing arrangement according to any one of claims 1-6, **characterised in that** each of said cooling units (6) comprises a liquid spraying device (7) arranged to eject a cooling liquid, the cooling system (5) comprising a pipe system (16) through which liquid is conducted to said cooling units (6), and the control unit (27) being arranged to inactivate or activate said spraying device (7).

8. An animal housing arrangement according to claim 7, **characterised in that** each subgroup (11-15) is provided with a valve (22-26) by means of which the flow of liquid to the cooling unit (6) or units of that subgroup (11-15) is controlled, the control unit (27) being arranged to inactivate or activate the cooling unit (6) by controlling the operation of said valve (22-26).

9. An animal housing arrangement according to claim 7 or 8, **characterised in that** said inactivation of a subgroup (11-15) includes inactivation of the spraying devices (7) thereof, and said control of a subgroup (11-15) to be in active mode includes control of the spraying devices (7) thereof to be in active mode.

10. An animal housing arrangement according to any one of claims 1-8, **characterised in that** each cooling unit (6) comprises an electrically driven fan (8) arranged to generate a flow of air, and that the control unit (27) is arranged to control the operation of said fan (8), wherein said inactivation of a subgroup (11-15) includes inactivation of the fan (8) or fans thereof, and said control of a subgroup (11-15) to be in active mode includes a control of the fan (8) or fans thereof to be in active mode.

11. An animal housing arrangement according to any one of claims 1-10, **characterised in that** each cooling unit comprises a liquid spraying device (7) arranged to eject a cooling liquid and an electrically driven fan (8) arranged to generate a flow of air, and said inactive mode is referred to as inactivation of at least one of the spraying device (7) and the fan (8).

12. An animal housing arrangement according to any one of claims 1-11, **characterised in that** said enclosed area (1) is any of a waiting area, a milking area, a feeding area or a resting area.

13. A method of controlling a cooling system (5) for cooling of domestic animals in an animal housing arrangement, wherein
- said cooling system (5) comprises a plurality of cooling units (6) provided to generate a flow of a cooling medium that will either directly or indirectly contribute to the cooling of said animals, and
- said animal housing arrangement comprises an enclosed area (1) which is arranged to house said animals and is provided with an entrance (3) in one end and an exit (4) in another end, wherein, in said area, there is provided an element (28) which is arranged to move in a direction from the entrance (3) towards the exit (4) and thereby to permit or force animals to move in said direction inside the enclosed area (1),
wherein said plurality of cooling units (6) are subdivided into at least two separate subgroups (11-15) of cooling units (6), each subgroup (11-15) comprising at least one cooling unit (6), wherein during operation of the cooling system (5), the position of said element (28) is detected as the latter moves in said direction, and based on this detected position at least one subgroup (11-15) on a first side of said element (28) is controlled to be at least periodically in active mode and simultaneously at least one other subgroup (11-15) on an opposite second side of said element (28) is controlled to be in inactive mode.

14. A method according to claim 13, **characterised in that**, on at least one of said first side and second side, there is provided a plurality of subgroups (11-15), wherein said subgroups (11-15) are sequentially inactivated in accordance with a predetermined order, while simultaneously at least one other subgroup (11-15) on the same side is controlled to be at least periodically in active mode.

15. A method according to claim 14, **characterised in that** all subgroups (11-15) on said second side of said element (28) are controlled to be in inactive mode and, simultaneously, at least one subgroup (11-15) on said first side is controlled to be at least periodically in active mode.

## Patentansprüche

1. Tierbehausungsanlage, die einen umschlossenen Bereich (1) umfasst, der so angeordnet ist, dass Haustiere darin untergebracht werden, und ein Kühlungssystem (5) zum Kühlen von Haustieren, wobei das Kühlungssystem (5) eine Mehrzahl von Kühlungseinheiten (6) umfasst, die so vorgesehen sind, dass sie einen Strom eines Kühlmittels erzeugen, der entweder direkt oder indirekt zur Kühlung der Tiere beiträgt, sowie eine Steuereinheit (27), die so angeordnet ist, dass sie den Betrieb der Kühlungseinheiten (6) steuert, wobei die Tierbehausungsanlage einen umschlossenen Bereich (1) umfasst, der so angeordnet ist, dass die Tiere darin untergebracht werden und der mit einem Eingang (3) an einem Ende und einem Ausgang (4) an einem anderen Ende versehen ist, **dadurch gekennzeichnet, dass**
in dem Bereich ein Element (28) vorgesehen ist, das so angeordnet ist, dass es sich in eine Richtung von dem Eingang (3) zum Ausgang (4) zu bewegt und Tieren dadurch erlaubt oder sie dazu bringt, sich innerhalb des umschlossenen Bereichs (1) in die Richtung zu bewegen, wobei die Mehrzahl von Kühlungseinheiten (6) in mindestens zwei getrennte Untergruppen (11 bis 15) von Kühlungseinheiten (6) unterteilt ist, wobei jede Untergruppe (11 bis 15) mindestens einen Teil des umschlossenen Bereichs (1) abdeckt und mindestens eine Kühlungseinheit (6) umfasst, wobei die Steuereinheit (27) so angeordnet ist, dass sie die Position des Elements (28) erfasst, wenn letzteres sich in die Richtung bewegt, und auf der Grundlage dieser erfassten Position mindestens eine Untergruppe (11 bis 15) auf einer ersten Seite des Elements (28) so steuert, dass sie sich im aktiven Modus befindet und gleichzeitig mindestens eine weitere Untergruppe (11 bis 15) auf einer gegenüberliegenden zweiten Seite des Elements (28) so steuert, dass sie sich im inaktiven Modus befindet.

2. Tierbehausungsanlage nach Anspruch 1, **dadurch gekennzeichnet, dass** die Steuereinheit (27) so angeordnet ist, dass sie nacheinander verschiedene Untergruppen (11 bis 15) von Kühlungseinheiten (6) auf der ersten Seite und/oder zweiten Seite nach einer bestimmten Reihenfolge deaktiviert, während sie gleichzeitig mindestens eine weitere Untergruppe (11 bis 15) auf derselben Seite so steuert, dass sie sich zumindest in regelmäßigen Abständen im aktiven Modus befindet.

3. Tierbehausungsanlage nach Anspruch 2, **dadurch gekennzeichnet, dass** eine Mehrzahl von Untergruppen (11 bis 15) auf der ersten Seite vorhanden ist und dass die Steuereinheit (27) so angeordnet ist, dass sie nacheinander Untergruppen (11 bis 15) von Kühlungseinheiten (6) auf der ersten Seite deaktiviert.

4. Tierbehausungsanlage nach einem der Ansprüche 1 bis 3, **dadurch gekennzeichnet, dass** die Steuereinheit (27) so angeordnet ist, dass sie sämtliche Untergruppen (11 bis 15) auf der zweiten Seite des Elements (28) so steuert, dass sie sich im inaktiven Modus befinden und gleichzeitig mindestens eine Untergruppe (11 bis 15) auf der ersten Seite so steuert, dass sie sich zumindest in regelmäßigen Abständen im aktiven Modus befindet.

5. Tierbehausungsanlage nach einem der Ansprüche 1 bis 4, **dadurch gekennzeichnet, dass** das Element (28) ein Element ist, das so angeordnet ist, dass es Tiere in dem umschlossenen Bereich (1) verdrängt und sie dadurch dazu bringt, sich von dem Eingang (3) zum Ausgang (4) zu bewegen, und wobei die zweite Seite davon die Seite zwischen dem Element (28) und dem Eingang (3) ist.

6. Tierbehausungsanlage nach einem der Ansprüche 1 bis 5, **dadurch gekennzeichnet, dass** das Kühlungssystem (5) Detektoren (30) für die Anwesenheit von Tieren umfasst, die so angeordnet sind, dass sie die Anwesenheit oder Abwesenheit von Tieren in verschiedenen Teilen des umschlossenen Bereichs (1) erfassen, wobei die Steuereinheit (27) so angeordnet ist, dass sie Untergruppen (11 bis 15), die Bereiche abdecken, in denen die Abwesenheit von Tieren erfasst wird, so steuert, dass sie sich im inaktiven Modus befinden und gleichzeitig Untergruppen (11 bis 15), die Bereiche abdecken, in denen die Anwesenheit von Tieren erfasst wird, so steuert, dass sie sich zumindest in regelmäßigen Abständen im aktiven Modus befinden.

7. Tierbehausungsanlage nach einem der Ansprüche 1 bis 6, **dadurch gekennzeichnet, dass** jede der Kühlungseinheiten (6) eine Flüssigkeitssprühvorrichtung (7) umfasst, die so angeordnet ist, dass sie eine Kühlflüssigkeit ausstößt, wobei das Kühlungssystem (5) ein Rohrsystem (16) umfasst, durch das Flüssigkeit zu den Kühlungseinheiten (6) geleitet wird, und wobei die Steuereinheit (27) so angeordnet ist, dass sie die Sprühvorrichtung (7) deaktiviert oder aktiviert.

8. Tierbehausungsanlage nach Anspruch 7, **dadurch gekennzeichnet, dass** jede Untergruppe (11 bis 15) mit einem Ventil (22 bis 26) versehen ist, mit dem der Flüssigkeitsdurchfluss zu der Kühlungseinheit (6) oder den -einheiten dieser Untergruppe (11 bis 15) gesteuert wird, wobei die Steuereinheit (27) so angeordnet ist, dass sie die Kühlungseinheit (6) durch Steuern des Betriebs des Ventils (22 bis 26) deaktiviert oder aktiviert.

9. Tierbehausungsanlage nach Anspruch 7 oder 8, **dadurch gekennzeichnet, dass** die Deaktivierung einer Untergruppe (11 bis 15) eine Deaktivierung der Sprühvorrichtungen (7) davon umfasst, und die Steuerung einer Untergruppe (11 bis 15), sodass sie sich im aktiven Modus befindet, die Steuerung der Sprühvorrichtungen (7) davon so umfasst, dass sie sich im aktiven Modus befinden.

10. Tierbehausungsanlage nach einem der Ansprüche 1 bis 8, **dadurch gekennzeichnet, dass** jede Kühlungseinheit (6) einen elektrisch betriebenen Lüfter (8) umfasst, der so angeordnet ist, dass er einen Luftstrom erzeugt, und dass die Steuereinheit (27) so angeordnet ist, dass sie den Betrieb des Lüfters (8) steuert, wobei die Deaktivierung einer Untergruppe (11 bis 15) eine Deaktivierung des Lüfters (8) oder der Lüfter davon umfasst, und die Steuerung einer Untergruppe (11 bis 15) derart, dass sie sich im aktiven Modus befindet, eine Steuerung des Lüfters (8) oder der Lüfter davon so umfasst, dass er bzw. sie sich im aktiven Modus befindet bzw. befinden.

11. Tierbehausungsanlage nach einem der Ansprüche 1 bis 10, **dadurch gekennzeichnet, dass** jede Kühlungseinheit eine Flüssigkeitssprühvorrichtung (7) umfasst, die so angeordnet ist, dass sie eine Kühlflüssigkeit ausstößt, und einen elektrisch betriebenen Lüfter (8), der so angeordnet ist, dass er einen Luftstrom erzeugt, und wobei der inaktive Modus als Deaktivierung von der Sprühvorrichtung (7) und/oder dem Lüfter (8) bezeichnet wird.

12. Tierbehausungsanlage nach einem der Ansprüche 1 bis 11, **dadurch gekennzeichnet, dass** der umschlossene Bereich (1) ein Wartebereich, ein Melkbereich, ein Fütterungsbereich oder ein Ruhebereich ist.

13. Verfahren zum Steuern eines Kühlungssystems (5) zum Kühlen von Haustieren in einer Tierbehausungsanlage, wobei
- das Kühlungssystem (5) eine Mehrzahl von Kühlungseinheiten (6) umfasst, die so vorgesehen sind, dass sie einen Strom eines Kühlmittels erzeugen, der entweder direkt oder indirekt zur Kühlung der Tiere beiträgt, und
- die Tierbehausungsanlage einen umschlossenen Bereich (1) umfasst, der so angeordnet ist, dass die Tiere darin untergebracht werden und mit einem Eingang (3) an einem Ende und einem Ausgang (4) an einem anderen Ende versehen ist, wobei in dem Bereich ein Element (28) vorgesehen ist, das so angeordnet ist, dass es sich in eine Richtung von dem Eingang (3) zum Ausgang (4) zu bewegt und Tieren dadurch erlaubt oder sie dazu bringt, sich innerhalb des umschlossenen Bereichs (1) in die Richtung zu bewegen, wobei die Mehrzahl von Kühlungseinheiten (6) in mindestens zwei getrennte Untergruppen (11 bis 15) von Kühlungseinheiten (6) unterteilt ist, wobei jede Untergruppe (11 bis 15) mindestens eine Kühlungseinheit (6) umfasst, wobei während des Betriebs des Kühlungssystems (5) die Position des Elements (28) erfasst wird, wenn letzteres sich in die Richtung bewegt, und auf der Grundlage dieser erfassten Position mindestens eine Untergruppe (11 bis 15) auf einer ersten Seite des Elements (28) so gesteuert wird, dass sie sich zumindest in regelmäßigen Abständen im aktiven Modus befindet, und gleichzeitig mindestens eine weitere Untergruppe (11 bis 15) auf einer gegenüberliegenden zweiten Seite des Elements (28) so, dass sie sich im inaktiven Modus befindet.

14. Verfahren nach Anspruch 13, **dadurch gekennzeichnet, dass** auf der ersten Seite und/oder der zweiten Seite eine Mehrzahl von Untergruppen (11 bis 15) vorgesehen ist, wobei die Untergruppen (11 bis 15) nacheinander nach einer bestimmten Reihenfolge deaktiviert werden, während gleichzeitig mindestens eine weitere Untergruppe (11 bis 15) auf derselben Seite so gesteuert wird, dass sie sich zumindest in regelmäßigen Abständen im aktiven Modus befindet.

15. Verfahren nach Anspruch 14, **dadurch gekennzeichnet, dass** sämtliche Untergruppen (11 bis 15) auf der zweiten Seite des Elements (28) so gesteuert werden, dass sie sich im inaktiven Modus befinden und gleichzeitig mindestens eine Untergruppe (11 bis 15) auf der ersten Seite so gesteuert wird, dass sie sich zumindest in regelmäßigen Abständen im aktiven Modus befindet.

## Revendications

1. Agencement de bâtiment d'élevage comprenant une zone close (1), agencée pour abriter des animaux domestiques, et un système de refroidissement (5) destiné à refroidir des animaux domestiques, ledit système de refroidissement (5) comprenant une pluralité d'unités de refroidissement (6) prévues pour générer un écoulement d'un agent de refroidissement qui contribue directement ou indirectement au refroidissement desdits animaux, et une unité de commande (27) agencée pour commander le fonctionnement desdites unités de refroidissement (6), ledit agencement de bâtiment d'élevage comprenant une zone close (1) qui est agencée pour abriter lesdits animaux et qui est dotée d'une entrée (3) à une extrémité et d'une sortie (4) à une autre extrémité, **caractérisé en ce que**,
dans ladite zone, un élément (28) est prévu, qui est agencé pour se déplacer dans une direction depuis l'entrée (3) vers la sortie (4), et permet ainsi à des animaux de se déplacer ou les force à se déplacer dans ladite direction à l'intérieur de la zone close (1), dans lequel
ladite pluralité d'unités de refroidissement (6) est divisée en au moins deux sous-groupes (11-15) séparés d'unités de refroidissement (6), chaque sous-groupe (11-15) couvrant au moins une partie de ladite zone close (1) et comprenant au moins une unité de refroidissement (6), l'unité de commande (27) étant agencée pour détecter la position dudit élément (28) lorsque ce dernier se déplace dans ladite direction et pour, sur la base de cette position détectée, commander au moins un sous-groupe (11-15) d'un premier côté dudit élément (28) afin qu'il soit en mode actif et commander simultanément au moins un autre sous-groupe (11-15) d'un second côté opposé dudit élément (28) afin qu'il soit en mode inactif.

2. Agencement de bâtiment d'élevage selon la revendication 1, **caractérisé en ce que** ladite unité de commande (27) est agencée pour désactiver de manière séquentielle différents sous-groupes (11-15) d'unités de refroidissement (6) dudit premier côté et/ou dudit second côté selon un ordre prédéterminé, tout en commandant simultanément au moins un autre sous-groupe (11-15) du même côté afin qu'il soit au moins périodiquement en mode actif.

3. Agencement de bâtiment d'élevage selon la revendication 2, **caractérisé en ce qu'**il y a une pluralité de sous-groupes (11-15) dudit premier côté et **en ce que** l'unité de commande (27) est agencée pour désactiver de manière séquentielle des sous-groupes (11-15) d'unités de refroidissement (6) dudit premier côté.

4. Agencement de bâtiment d'élevage selon l'une quelconque des revendications 1 à 3, **caractérisé en ce que** l'unité de commande (27) est agencée pour commander tous les sous-groupes (11-15) dudit second côté dudit élément (28) afin qu'ils soient en mode inactif et pour commander simultanément au moins un sous-groupe (11-15) dudit premier côté afin qu'il soit au moins périodiquement en mode actif.

5. Agencement de bâtiment d'élevage selon l'une quelconque des revendications 1 à 4, **caractérisé en ce que** ledit élément (28) est un élément agencé pour pousser les animaux dans la zone close (1) et les forcer ainsi à se déplacer depuis ladite entrée (3) vers ladite sortie (4), et ledit second côté de celui-ci étant le côté entre ledit élément (28) et ladite entrée (3).

6. Agencement de bâtiment d'élevage selon l'une quelconque des revendications 1 à 5, **caractérisé en ce que** le système de refroidissement (5) comprend des détecteurs de présence d'animaux (30) agencés pour détecter la présence ou l'absence d'animaux dans différentes parties de ladite zone close (1), l'unité de commande (27) étant agencée pour commander des sous-groupes (11-15) qui couvrent des zones dans lesquelles l'absence d'animaux est détectée afin qu'ils soient en mode inactif et pour commander simultanément des sous-groupes (11-15) qui couvrent des zones dans lesquelles la présence d'animaux est détectée afin qu'ils soient au moins périodiquement en mode actif.

7. Agencement de bâtiment d'élevage selon l'une quelconque des revendications 1 à 6, **caractérisé en ce que** chacune desdites unités de refroidissement (6) comprend un dispositif de vaporisation de liquide (7) agencé pour expulser un liquide de refroidissement, le système de refroidissement (5) comprenant un système de tuyaux (16) à travers lequel du liquide est guidé dans lesdites unités de refroidissement (6), et l'unité de commande (27) étant agencée pour désactiver ou activer ledit dispositif de vaporisation (7).

8. Agencement de bâtiment d'élevage selon la revendication 7, **caractérisé en ce que** chaque sous-groupe (11-15) est doté d'une vanne (22-26) au moyen de laquelle l'écoulement de liquide dans l'unité ou les unités de refroidissement (6) de ce sous-groupe (11-15) est commandé, l'unité de commande (27) étant agencée pour désactiver ou activer l'unité de refroidissement (6) en commandant le fonctionnement de ladite vanne (22-26).

9. Agencement de bâtiment d'élevage selon la revendication 7 ou 8, **caractérisé en ce que** ladite désactivation d'un sous-groupe (11-15) inclut la désactivation des dispositifs de vaporisation (7) de celui-ci, et ladite commande d'un sous-groupe (11-15) afin qu'il soit en mode actif inclut la commande des dispositifs de vaporisation (7) de celui-ci afin qu'ils soient en mode actif.

10. Agencement de bâtiment d'élevage selon l'une quelconque des revendications 1 à 8, **caractérisé en ce que** chaque unité de refroidissement (6) comprend un ventilateur à actionnement électrique (8) agencé pour générer un flux d'air, et **en ce que** l'unité de commande (27) est agencée pour commander le fonctionnement dudit ventilateur (8), ladite désactivation d'un sous-groupe (11-15) incluant la désactivation du ventilateur (8) ou des ventilateurs de celui-ci, et ladite commande d'un sous-groupe (11-15) afin qu'il soit en mode actif incluant une commande du ventilateur (8) ou des ventilateurs de celui-ci afin qu'il(s) soi(en)t en mode actif.

11. Agencement de bâtiment d'élevage selon l'une quelconque des revendications 1 à 10, **caractérisé en ce que** chaque unité de refroidissement comprend un dispositif de vaporisation de liquide (7) agencé pour expulser un liquide de refroidissement et un ventilateur à actionnement électrique (8) agencé pour générer un flux d'air, et ledit mode inactif correspond à la désactivation du dispositif de vaporisation (7) et/ou du ventilateur (8).

12. Agencement de bâtiment d'élevage selon l'une quelconque des revendications 1 à 11, **caractérisé en ce que** ladite zone close (1) est une zone d'attente, une zone de traite, une zone d'alimentation ou une zone de repos.

13. Procédé de commande d'un système de refroidissement (5) destiné à refroidir des animaux domestiques dans un agencement de bâtiment d'élevage, dans lequel
- ledit système de refroidissement (5) comprend une pluralité d'unités de refroidissement (6) prévues pour générer un écoulement d'un agent de refroidissement qui contribue directement ou indirectement au refroidissement desdits animaux, et
- ledit agencement de bâtiment d'élevage comprend une zone close (1) qui est agencée pour abriter lesdits animaux et est dotée d'une entrée (3) à une extrémité et d'une sortie (4) à une autre extrémité, dans lequel, dans ladite zone, un élément (28) est prévu, qui est agencé pour se déplacer dans une direction depuis l'entrée (3) vers la sortie (4), et permet ainsi à des animaux de se déplacer ou les force à se déplacer dans ladite direction à l'intérieur de la zone close (1), dans lequel ladite pluralité d'unités de refroidissement (6) est divisée en au moins deux sous-groupes (11-15) séparés d'unités de refroidissement (6), chaque sous-groupe (11-15) comprenant au moins une unité de refroidissement (6), dans lequel, pendant le fonctionnement du système de refroidissement (5), la position dudit élément (28) est détectée lorsque ce dernier se déplace dans ladite direction, et, sur la base de cette position détectée, au moins un sous-groupe (11-15) d'un premier côté dudit élément (28) est commandé afin qu'il soit au moins périodiquement en mode actif et simultanément au moins un autre sous-groupe (11-15) d'un second côté opposé dudit élément (28) est commandé afin qu'il soit en mode inactif.

14. Procédé selon la revendication 13, **caractérisé en ce que**, dudit premier côté et/ou dudit second côté, une pluralité de sous-groupes (11-15) est prévue, lesdits sous-groupes (11-15) étant désactivés de manière séquentielle selon un ordre prédéterminé, tandis que, simultanément, au moins un autre sous-groupe (11-15) du même côté est commandé afin qu'il soit au moins périodiquement en mode actif.

15. Procédé selon la revendication 14, **caractérisé en ce que** tous les sous-groupes (11-15) dudit second côté dudit élément (28) sont commandés afin qu'ils soient en mode inactif et, simultanément, au moins un sous-groupe (11-15) dudit premier côté est commandé afin qu'il soit au moins périodiquement en mode actif.
